Europäisches Patentamt

European Patent Office

Office européen des brevets

(19)

(11) **EP 0 986 913 B1**

(12) **EUROPÄISCHE PATENTSCHRIFT**

(45) Veröffentlichungstag und Bekanntmachung des Hinweises auf die Patenterteilung:
**01.08.2001 Patentblatt 2001/31**

(21) Anmeldenummer: **98928281.9**

(22) Anmeldetag: **16.05.1998**

(51) Int Cl.⁷: **H04N 7/18**, H04N 5/235

(86) Internationale Anmeldenummer:
**PCT/EP98/02893**

(87) Internationale Veröffentlichungsnummer:
**WO 98/56183 (10.12.1998 Gazette 1998/49)**

(54) **ELEKTRONISCHE BRILLE, INSBESONDERE NACHTSICHTBRILLE**

ELECTRONIC SPECTACLES, ESPECIALLY NIGHT VISION SPECTACLES

LUNETTES ELECTRONIQUES, NOTAMMENT LUNETTES DE VISION NOCTURNE

(84) Benannte Vertragsstaaten:
**BE DE ES FR GB IT NL SE**

(30) Priorität: **07.06.1997 DE 19724140**

(43) Veröffentlichungstag der Anmeldung:
**22.03.2000 Patentblatt 2000/12**

(73) Patentinhaber: **Jurca Optoelektronik GmbH**
**63110 Rodgau 1 (DE)**

(72) Erfinder:
  • **JAKOB, Gerd**
    **D-45130 Essen (DE)**
  • **JURCA, Marius**
    **D-63755 Alzenau (DE)**
  • **MARSCHALL, Michael**
    **D-63039 Offenbach (DE)**
  • **REUTER, Arnulf**
    **D-61462 Königstein (DE)**

(74) Vertreter: **Ostertag, Ulrich, Dr.**
**Patentanwälte**
**Dr. Ulrich Ostertag**
**Dr. Reinhard Ostertag**
**Eibenweg 10**
**70597 Stuttgart (DE)**

(56) Entgegenhaltungen:
**DE-U- 9 217 643          JP-A- 7 288 754**

  • **MURINO V ET AL: "ADAPTIVE CAMERA REGULATION FOR INVESTIGATION OF REAL SCENES" IEEE TRANSACTIONS ON INDUSTRIAL ELECTRONICS, Bd. 43, Nr. 5, Oktober 1996, Seiten 588-599, XP000643558**
  • **PATENT ABSTRACTS OF JAPAN vol. 96, no. 2, 29 February 1996**

**Beschreibung**

Die Erfindung betrifft eine elektronische Brille, insbesondere Nachtsichtbrille, mit

a) einem Brillengestell, welches trägt:

aa) mindestens eine elektronische Kamera;

ab) mindestens ein Display, das vom Benutzer betrachtet werden kann;

b) einer Bildbearbeitungselektronik, welche das von der elektronischen Kamera aufgenommene Bild verarbeitet und ein Ausgangssignal zur Aussteuerung des Displays bereitstellt.

Brillenartige Vorrichtungen, mit welchen das Sehvermögen von Personen verbessert werden soll, sind in unterschiedlicher Ausführungsform bekannt. Im einzelnen kann es dabei darum gehen, ein beeinträchtigtes Sehvermögen zu korrigieren, wie etwa eine Farbblindheit, eine Dämmerungs- oder Nachtblindheit oder dergleichen. Ziel derartiger Vorrichtungen kann aber auch sein, das normale, gesunde Sehvermögen des Benutzers zu steigern.

Die bekannten brillenartigen Vorrichtungen der eingangs genannten Art, wie sie etwa im DE-GM 92 17 643 beschrieben sind, leiden unter folgendem Nachteil: Sowohl auf Grund der Bewegung des Benutzers (z.B. durch Wenden des Kopfes) als auch auf Grund der Bewegung von Objekten im Gesichtsfeld der elektronischen Kamera können rasch aufeinanderfolgend Bilder zu verarbeiten sein, in denen die Grauwertverteilung sehr unterschiedlich ist. Die bekannten Bildbearbeitungselektroniken können sich dieser Situation nicht anpassen; der Kontrast des auf dem Display zur Anzeige gebrachten Bildes kann immer nur für eine bestimmte Grauwertverteilung optimiert werden. Der Benutzer sieht sich daher sehr häufig in Situationen, in denen das ihm zur Anzeige gebrachte Bild einen unnötig schlechten Kontrast aufweist. "Unnötig schlecht" deshalb, weil an und für sich die Elektronik und Displays bei besserer Einstellung in der Lage wären, ein kontrastreicheres Bild zu erzeugen.

Aufgabe der vorliegenden Erfindung ist es, eine elektronische Brille, insbesondere Nachtsichtbrille, der eingangs genannten Art so auszubilden, daß dem Benutzer auf dem Display immer ein Bild dargeboten wird, dessen Kontrast entsprechend der technischen Grundausstattung optimal ist.

Diese Aufgabe wird erfindungsgemäß dadurch gelöst, daß
c) die Bildbearbeitungselektronik (20) umfaßt:

ca) einen Analysekreis, welcher die Grauwertverteilung H(x) in dem von der elektronischen Kamera aufgenommenen Bild ermittelt;

cb) einen Transformationskreis, welcher der ursprünglichen Grauwertverteilung H(x) eine modifizierte Grauwertverteilung H'(x) zuordnet, in der die Häufigkeit und Zahl der unterschiedlichen auftretenden Grauwerte identisch ist, die Lage der auftretenden Grauwerte jedoch in dem Sinne gespreizt ist, daß der Grauwertbereich breiter ist;

cc) einen Aussteuerkreis, welcher das Display so aussteuert, daß jeder Bildpunkt, der im von der elektronischen Kamera aufgenommenen Bild einen der ursprünglichen Grauwertverteilung H(x) entsprechenden Grauwert aufwies, nunmehr den der modifizierten Grauwertverteilung H'(x) entsprechenden Grauwert aufweist.

Erfindungsgemäß wird also in dem sogenannten "Analysekreis" ermittelt, wie die Häufigkeit von Bildpunkten, die einen bestimmten Grauwert aufweisen, über den zur Verfügung stehenden Bereich von Grauwerten verteilt ist. Wird dabei eine Häufigkeit von Grauwerten in einem verhältnismäßig schmalen Teilbereich des zur Verfügung stehenden Gesamtbereiches festgestellt, was Ausdruck eines schlechten Kontrastes ist, wird diese Grauwertverteilung durch den Transformationskreis "modifiziert". Die Modifikation geschieht so, daß selbstverständlich Bildpunkte, die im ursprünglichen Bild denselben Grauwert aufwiesen, auch weiterhin untereinander identische Grauwerte zeigen. Die "Lage" dieser Grauwerte wird nunmehr allerdings entsprechend einer "Äqualisationskennlinie" genannten Transformationsformel so verschoben, daß möglichst der gesamte zur Verfügung stehende Bereich von Grauwerten ausgenutzt wird. Ein Aussteuerkreis wird erfindungsgemäß dann dazu eingesetzt, entsprechend dieser modifizierten Grauwertverteilung H'(x) das Display auszusteuern, welches ein Bild mit den Umständen entsprechend optimalem Kontrast zeigt. All dies geschieht in Echtzeit, so daß dem Benutzer unabhängig von den zeitlich variierenden, von der elektronischen Kamera aufgenommenen Bildern stets ein Bild mit optimalem Kontrast zur Verfügung steht.

Bei einem besonders bevorzugten Ausführungsbeispiel der Erfindung arbeitet der Transformationskreis nach folgende Formel:

$$Y(X) = \frac{K \cdot \sum_{i=0}^{X} \left[ H(i) \right]^m}{\sum_{i=0}^{K-1} \left[ H(i) \right]^m}$$

wobei y der neue, dem ursprünglichen Grauwert x zugeordnete Grauwert, K die Gesamtzahl verfügbarer diskreter Grauwerte und m ein Anpassungsparameter sind.

H(x) ist dabei das "diskrete genormte Histogramm", also das Verhältnis der Anzahl der Bildpunkte mit dem Grauwert x zur Gesamtzahl der Bildpunkte.

Im allgemeinen reicht es aus, wenn m = 1 ist. Gegebenenfalls kann aber durch Versuche auch ermittelt werden, ob ein von 1 abweichender Wert für m zu noch besseren Resultaten führt.

Ein Ausführungsbeispiel der Erfindung wird nachfolgend anhand der Zeichnung näher erläutert; es zeigen

Figur 1                    schematisch die physische Ausgestaltung einer erfindungsgemäßen Nachtsichtbrille;

Figuren 2a und 2b          Histogramme, die bei der Bildverarbeitung in der Nachtsichtbrille von Figur 1 eine Rolle spielen;

Figur 3                    schematisch ein Blockdiagramm der erfindungsgemäßen Bildbearbeitungselektronik.

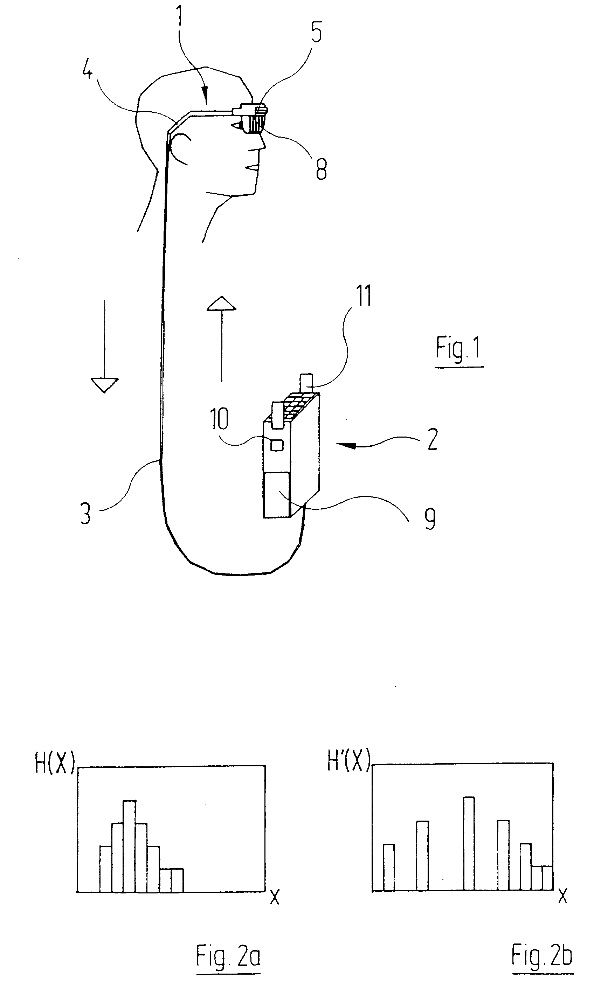

Wie Figur 1 zu entnehmen ist, besteht die Nachtsichtbrille aus zwei Hauptkomponenten, nämlich einem Brillenteil 1 und einem Taschenteil 2, die z.B. über ein elektrisches Kabel 3 miteinander verbunden sind.

Das Brillenteil 1 umfaßt ein in üblicher Weise zu tragendes Brillengestell 4, an dem mindestens eine dämmerungstaugliche elektronische Kamera, z.B. eine CCD-Kamera, 5 und für jedes Auge ein elektronisches Display 8 mit der zugehörigen Betrachtungsoptik angeordnet sind. Das von der elektronischen Kamera 5 aufgenommene Bild wird in einer Weise, die bis auf die nachfolgende Modifikation bekannt ist, durch eine Bildbearbeitungselektronik verarbeitet und auf den Displays 8 so zur Wiedergabe gebracht, daß der Benutzer das elektronisch bearbeitete Bild betrachten kann. Die Bildbearbeitungselektronik kann teilweise direkt im Brillenteil 1 vorgesehen sein; soweit hierfür größere und schwere Komponenten eingesetzt werden, sind diese jedoch vorteilhafterweise im Taschenteil 2 untergebracht.

Das Taschenteil 2 enthält darüber hinaus eine Batterie 9 und eine Steckdose 10 für hier nicht näher definierte Peripheriegeräte. Das Taschenteil 2 kann mittels eines Riemens 11 an der Schulter des Benutzers getragen werden.

Wie bereits erwähnt, kann die Bildbearbeitungselektronik insofern beliebig sein, als sie eben in der Lage sein muß, die von der elektronischen Kamera 5 aufgenommenen Bilder in elektronische Signale umzuwandeln, mit denen die Displays 8 ausgesteuert werden können. Zusätzlich ist die Bildverarbeitungselektronik mit einer Einrichtung ausgestattet, welche eine automatische Kontrastoptimierung des auf den Displays 8 zur Anzeige gebrachten Bildes besorgt. Diese Kontrastoptimierung basiert auf dem Prinzip der sogenannten Histogramm-Äqualisation. Hierunter ist ein Verfahren zu verstehen, bei welchem die Grauwertverteilung des aufgenommenen Bildes "gespreizt" wird. Bei dieser "Spreizung" werden solche Grauwertbereiche, die im von der elektronischen Kamera 5 aufgenommenen Bild in einem begrenzten Grauwertbereich liegen, so umgesetzt, daß möglichst der ganze Grauwertbereich genutzt wird.

Das Verfahren basiert auf der Auswertung von "Histogrammen". Ein "Grauwert-Histogramm" ist ein Diagramm, welches die Grauwertverteilung eines Bildes in folgender Weise beschreibt: Auf der Ordinate (x) ist der jeweilige Grauwert aufgetragen; auf der Ordinate H(x) wird die auf die Gesamtheit bezogene Häufigkeit, das "normierte Histogramm", derjenigen Bildpunkte angegeben, die einen bestimmten Grauwert (x) aufweisen.

Ein Beispiel für ein derartiges Histogramm ist in Figur 2a dargestellt. Hier ist zu erkennen, daß Grauwerte mit nennenswerter Häufigkeit nur in einem verhältnismäßig schmalen Bereich der verfügbaren Grauwerte auftreten. Dies bedeutet, daß der Kontrast verhältnismäßig schlecht ist. In Figur 2b ist ein zweites Histogramm gezeigt, bei dem über den gesamten Grauwertbereich (x) hinweg verteilt Bildpunkte mit nennenswerter Häufigkeit H'(x) auftreten, die diesen Grauwert zeigen. Bei der Grauwertverteilung H'(x) von Figur 2b wird also der gesamte verfügbare Grauwertbereich ausgenutzt; das Bild zeigt einen verhältnismäßig hohen Kontrast.

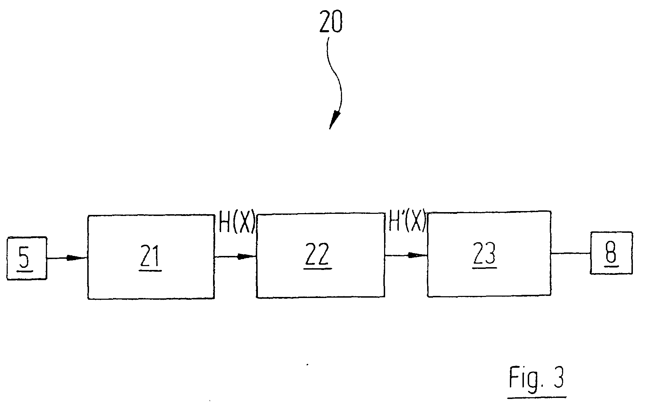

Bei der hier beschriebenen Nachtsichtbrille ist nunmehr die Bildbearbeitungselektronik, die schematisch in Figur 3 dargestellt und dort insgesamt mit dem Bezugszeichen 20 gekennzeichnet ist, so ausgelegt, daß sie automatisch aus Grauwertverteilungen geringen Kontrastes, wie in Figur 2a dargestellt, Grauwertverteilungen H'(x) großen Kontrastes, wie in Figur 2b dargestellt, erzeugt.

Der Bildbearbeitungselektronik 20 wird das von der elektronischen Kamera 5 erzeugte Bildsignal zugeführt. In einem Analysekreis 21 wird die Grauwertverteilung H(x), also das "normierte Histogramm", des Ausgangssignales der elektronischen Kamera 5 erstellt und diesem entsprechende Daten werden an einen Transformationskreis 22 übergeben. In dem Transformationskreis 22 geschieht folgendes:

Jedem Grauwert x wird entsprechend einer "Äqualisationskennlinie" ein neuer Grauwert y zugeordnet. Bei der "Äqualisationskennlinie" handelt es sich mathematisch gesprochen um eine Transformationsformel, die beim bevorzugten Ausführungsbeispiel wie folgt lautet:

$$Y(X) = \frac{K \cdot \sum_{i=0}^{x} \left[H(i)\right]^m}{\sum_{i=0}^{K-1} \left[H(i)\right]^m}$$

In dieser Formel ist K die Gesamtzahl diskreter Grauwerte, die verarbeitet werden kann; m ist der sogenannte "Grad der Äqualisation", ein an den jeweiligen Einzelfall anpaßbarer Parameter. Im Normalfall ist m = 1. H(x) ist das bereits oben definierte diskrete genormte Histogramm. Der Transformationskreis 22 gibt also ein Signal aus, welches der modifizierten Grauwertverteilung H'(x) von Figur 2 entspricht. Erkennbar sind in letzterer die Grauwerte aus einem schmalen Bereich auf den gesamten Grauwertbereich gestreckt.

Ein Signal, welches die der modifizierten Grauwertverteilung H'(x) entsprechenden Informationen trägt, wird einem Aussteuerkreis 23 zugeführt. Dieser Aussteuerkreis 23 sorgt nunmehr dafür, daß alle von der elektronischen Kamera 5 aufgenommenen Bildpunkte, die ursprünglich einen bestimmten Grauwert x zeigten, nunmehr den transformierten Grauwert y erhalten. Mit einem entsprechenden Aussteuersignal werden schließlich das bzw. die Displays 8 beaufschlagt.

Im Gebrauch wird so der Kontrast des Bildes auch bei einer Änderung des Gesichtsfeldes z.B. infolge einer Bewegung des Anwenders oder Wendens des Kopfes, automatisch nachgeführt. Durch die in den Schaltkreisen 21, 22, 23 der Figur 3 durchgeführte Äqualisation wird eine den jeweiligen Umständen entsprechend optimierte Grauwertverteilung H'(x) in Echtzeit erzeugt und erleichtert so dem Benutzer der Nachtsichtbrille die Wahrnehmung.

**Patentansprüche**

1.  Elektronische Brille, insbesondere Nachtsichtbrille, mit

a) einem Brillengestell, welches trägt:

aa) mindestens eine elektronische Kamera;

ab) mindestens ein Display, das vom Benutzer beobachtet werden kann;

b) einer Bildbearbeitungselektronik, welche das von der elektronischen Kamera aufgenommene Bild verarbeitet und ein Ausgangssignal zur Aussteuerung des Displays bereitstellt,

dadurch gekennzeichnet, daß

c) die Bildbearbeitungselektronik (20) umfaßt:

ca) einen Analysekreis (21), welcher die Grauwertverteilung (H(x)) in dem von der elektronischen Kamera (5) aufgenommenen Bild ermittelt;

cb) einen Transformationskreis (22), welcher der ursprünglichen Grauwertverteilung (H(x)) eine modifizierte Grauwertverteilung (H'(x)) zuordnet, in der die Häufigkeit und Zahl der unterschiedlichen auftretenden Grauwerte identisch ist, die Lage der auftretenden Grauwerte jedoch in dem Sinne gespreizt ist, daß der auftretende Grauwertbereich breiter ist;

cc) einen Aussteuerkreis (23), welcher das Display (8) so aussteuert, daß jeder Bildpunkt, der im von der elektronischen Kamera (5) aufgenommenen Bild einen der ursprünglichen Grauwertverteilung (H(x)) entsprechenden Grauwert aufwies, nunmehr einen der modifizierten Grauwertverteilung (H'(x)) entsprechenden Grauwert aufweist.

**2.** Elektronische Brille nach Anspruch 1, dadurch gekennzeichnet, daß der Transformationskreis (22) nach folgender Formel arbeitet:

$$Y(X) = \frac{K \cdot \sum_{i=0}^{x} \left[H(i)\right]^m}{\sum_{i=0}^{K-1} \left[H(i)\right]^m}$$

wobei y der neue, dem ursprunglichen Grauwert x zugeordnete Grauwert, K die Gesamtzahl verfügbarer diskreter Grauwerte, m ein Anpassungsparameter und H(x) das diskrete normierte Histogramm sind.

**3.** Elektronische Brille nach Anspruch 2, dadurch gekennzeichnet, daß m = 1 ist.

**Claims**

**1.** Electronic glasses, in particular night vision glasses, having

a) a frame which supports:

aa) at least one electronic camera;

ab) at least one display that can be viewed by the user;

b) an electronic image processing circuit which processes the image received by the electronic camera and provides an output signal for driving the display,

characterised in that
c) the electronic image processing circuit (20) includes:

ca) an analysis circuit (21) which determines the grey-scale value distribution (H(x)) in the image received by the electronic camera (5);

cb) a transformation circuit (22) which assigns a modified grey-scale distribution (H'(x)) to the original grey-scale distribution (H(x)), in which the frequency and number of the different, occurring grey-scale values is identical, but the position of the occurring grey-scale values is expanded in the sense that the occurring grey-scale value range is wider;

cc) a drive circuit (23), which drives the display (8) in such a way that each pixel which, in the image received by the electronic camera (5), had a grey-scale value corresponding to the original grey-scale value distribution (H(x)), now has a grey-scale value corresponding to the modified grey-scale value distribution (H'(x)).

**2.** Electronic glasses according to Claim 1, characterised in that the transformation circuit (22) operates in accordance with the following formula:

$$Y(X) = \frac{K \cdot \sum_{i=0}^{x} \left[H(i)\right]^m}{\sum_{i=0}^{k-1} \left[H(i)\right]^m}$$

where Y is the new grey-scale value assigned to the original grey-scale value x, K is the total number of available discrete grey-scale values, m is a matching parameter and H(x) is the discrete standardised histogram.

**3.** Electronic glasses according to Claim 2,
characterised in that m = 1.

**Revendications**

**1.** Lunettes électroniques, notamment lunettes de vision nocturne, avec

a) un montant de lunettes qui porte :

aa) au moins une caméra électronique,
ab) au moins un afficheur pouvant être observé par l'utilisateur,

b) un dispositif électronique de traitement de l'image qui traite l'image acquise par la caméra électronique et fournit un signal de sortie pour le contrôle de l'afficheur,

**caractérisées en ce que**
c) le dispositif électronique de traitement de l'image (20) comprend :

ca) un circuit d'analyse (21) qui détermine la répartition des valeurs de gris (H(x)) dans l'image acquise par la caméra électronique (5) ;
cb) un circuit de transformation (22) qui, à la répartition d'origine des valeurs de gris (H(x)), attribue une répartition modifiée des valeurs de gris (H'(x)), dans laquelle la fréquence et le nombre des valeurs de gris différentes apparaissant sont identiques, la position des valeurs de gris apparaissant étant cependant étalée, dans le sens que le domaine de valeurs de gris apparaissant est plus large ;
cc) un circuit de contrôle (23) qui contrôle l'afficheur (8) de telle sorte que chaque pixel qui présentait une valeur de gris correspondant à la répartition des valeurs de gris (H(x)) d'origine dans l'image acquise par la caméra électronique (5), présente désormais l'une des valeurs de gris correspondant à la répartition modifiée des valeurs de gris (H'(x)).

**2.** Lunettes électroniques selon la revendication 1, **caractérisées en ce que** le circuit de transformation (22) opère selon la formule suivante :

$$Y(X) = \frac{K \cdot \sum_{i=0}^{X} \left[H(i)\right]^m}{\sum_{i=0}^{K-1} \left[H(i)\right]^m}$$

y étant la nouvelle valeur de gris attribuée à la valeur de gris x d'origine, K étant le nombre total de valeurs de gris discrètes disponibles, m un paramètre d'adaptation et H (i) l'histogramme discret normalisé.

**3.** Lunettes électroniques selon la revendication 2, **caractérisées en ce que** m = 1.

Fig.1

H(X)

Fig. 2a

H'(X)

Fig. 2b

20

| 5 | → | 21 | H(X)→ | 22 | H'(X)→ | 23 | → | 8 |

Fig. 3